# EUROPEAN PATENT APPLICATION

(11) **EP 3 012 988 A1**
(43) Date of publication of application: **27.04.2016**
(21) Application number: 14189478.2
(22) Date of filing: 20.10.2014
(51) Int. Cl.: H04J 14/02

(54) **Spectral resource optimization within an optical network**

(71) Applicant: Nokia Solutions and Networks GmbH & Co. KG, 81541 Munich (DE)
(72) Inventor: Michaelis, Thomas, 82178 Puchheim (DE); Konrad, Beate, Gordon, New South Wales 2072 (AU)

(57) **Abstract**

It is described a method, a device (100) and a computer program for optimizing a spectral resource allocation on an optical link (OL1) within an optical network (MON) a first network node (N1) with a neighboring second network node (N2). The method comprises (a) obtaining first information about a first spectral resource allocation used for a first data connection being established over the optical link (OL1); (b) obtaining second information about a second spectral resource allocation used for a second data connection being supposed to be established over the optical link (OL1); (c) comparing the first spectral resource allocation with the second spectral resource allocation; and (d) in the presence of a spectral overlap between the first spectral resource allocation and the second spectral resource allocation, changing at least one of the two spectral resource allocations in such a manner that the resulting new first spectral resource allocation is spectrally separated from the resulting new second spectral resource allocation. It is further described a method for optimizing spectral resource allocations for a plurality of optical links (OL1, OL2) which relies on the above mentioned method.

## Description

### Field of invention

The present invention generally relates to the technical field of operating optical networks, wherein a number of optical network nodes are arranged in a mesh and are connected with optical fibers. Specifically, the present invention relates to a method, to a device and to a computer program for optimizing a spectral resource allocation on an optical link optically connecting within an optical network a first network node with a neighboring second network node. Further, the present invention relates to a method for optimizing spectral resource allocations for a plurality of optical links within a meshed optical network.

### Art Background

A Wavelength Switched Optical Network (WSON) comprises a meshed structure of optical or optoelectronical network nodes which are connected directly or indirectly via optical links. The optical links may be Wavelength Division Multiplexing (WDM) fiber links comprising in the spectral domain a comb of several tens of wavelength channels. The network nodes are so called optical cross-connects (OXCs). Optical end-to-end connections (i.e. light paths without any conversion between optic signals and electronic signals) extending between two end network nodes are established in the optical domain and are switched by the OXCs at a predefined wavelength granularity.

In order to operate an optical network in a reliable manner data Traffic Engineering (TE) procedures are used. Such TE procedures use routing protocols which describe network topologies in particular with regard to network nodes and optical links. The network nodes are typically simply being described by their (IP) address. However, most information used for TE actually refers to the optical links in terms of (a) their addressing from both of their ends, (b) their resource type/capacity, etc.

Generally (i.e. not only for optical networks), a TE link is a representation of certain physical resources and their properties between two Generalized Multi-Protocol Label Switching (GMPLS) network nodes. This representation is influenced by (a) the known GMPLS concepts of link bundling and (b) unnumbered links (i.e. links not having an IP address), especially when dealing with technologies like Dense Wavelength Division Multiplexing (DWDM). Link bundling is used to improve routing scalability by automating a discovery and an aggregation of large numbers of parallel links between two directly adjacent nodes and advertising the resulting single (TE) link into Interior Gateway Protocol (IGP) routing protocols. Unnumbered links improve addressing scalability in case IP addresses are not available or if the overhead of managing IP addresses is considered as to be too high. It has turned out that a combination of three identifiers, (i) a TE link identifier (e.g. the IP address of the link), (ii) a component link identifier (e.g. a consecutive number), and (iii) a label is sufficient to unambiguously identify a reservable spectral resource (i.e. a wavelength on an end-to-end DWDM connection or end-to-end DWDM link.

The efficiency of data transmissions within optical networks having optical links with given bandwidths can be increased by using so called Wavelength Selective Optical Switch (WSOS) devices, which are known e.g. from US 8,437,634 B2. Such devices are capable to adjust the spectral distribution respectively the (center) frequency of their emitted or received optical signals.

In an optical network comprising, as network nodes, only optical switch devices which operate at fixed grid frequencies, the available frequencies represent a fixed bandwidth centered at a fixed optical frequency which is governed by an equidistant spectral grid. For such an optical network a data signal path computation, with which appropriate signal paths within a network are selected (commonly known as "routing"), is comparatively easy and well known in the art. By contrast thereto, in optical networks with WSOS devices, a data signal path computation taking into account given network constraints requires a change in the representation of the TE optical links, because the technology of WSOS devices allows to vary in a continuous and not discrete manner both the bandwidth and the center frequency of optical signals.

In order to optimize the cost of data transfer within an optical network the number of data connections which are realized with "wavelength continuity" should be maximized. In this respect a "wavelength continuity" is given if an optical data signal sent by a first network node via an intermediate network node to a second network node is only passed-through the intermediate network node without any conversion to and from an electrical representation (at the intermediate network node).

A global wavelength continuity (i.e. an operation of an optical network where a maximum number of data connections are realized with "wavelength continuity") is quite simple to ensure by means of proper data signal path computation or planning in case only fixed grid network nodes are employed because the spectral characteristic of the optical network is fairly static and the available spectral resources are "slotted". This means that all spectral channels have the same bandwidth and are aligned with an equidistant spectral grid.

However, optical networks which employ a flexible wavelength grid technology respectively which comprises the above mentioned WSOS devices are operated more dynamically and it is much more difficult to achieve a global wavelength continuity. In other words, when optical signals become variable in terms of the occupied spectral resources, the risk of not being able to provide global wavelength continuity between given network nodes increases. The same holds for the risk of having a lot of stranded spectral resources.

Based on the considerations given above there may be a need for optimizing a spectral resource allocation on optical links of an optical network, which comprises WSOS devices.

### Summary of the Invention

This need may be met by the subject matter according to the independent claims. Advantageous embodiments of the present invention are described by the dependent claims.

According to a first aspect of the invention there is provided a method for optimizing a spectral resource allocation on an optical link optically connecting within an optical network a first network node with a neighboring second network node. The provided method comprises (a) obtaining first information about a first spectral resource allocation used for a first data connection being established over the optical link; (b) obtaining second information about a second spectral resource allocation used for a second data connection being supposed to be established over the optical link; (c) comparing the first spectral resource allocation with the second spectral resource allocation; and (d) in the presence of a spectral overlap between the first spectral resource allocation and the second spectral resource allocation, changing at least one of the two spectral resource allocations in such a manner that the resulting new first spectral resource allocation is spectrally separated from the resulting new second spectral resource allocation.

The described method is based on the idea that by changing a spectral resource allocation on an optical link being used for a first data connection extending between two network nodes the correspondingly released spectral resources can be allocated for or to the second data connection. In this way the utilization of the optical link with respect to the amount of data which can be transferred over the optical link can be increased. Generally speaking, when applying the described method the efficiency of optical data links in particular within meshed optical networks can be enhanced.

It is mentioned that the spectral resource allocation on the optical link may refer to the spectral resources of several lightpaths or data connections between two or more network nodes, which lightpaths traverse the optical link.

Preferably, only one of the two spectral resource allocations is changed. This means that either the new first spectral resource allocation is the same as the (initial) first spectral resource allocation or the new second spectral resource allocation is the same as the (initial) second spectral resource allocation.

The first data connection and the second data connection may be established not only over the described first network node and the described neighboring second network node. The data connection may involve also further network nodes wherein respectively two of the further network nodes may be so called end network nodes in between which a corresponding end-to-end data connection is established.

The term spectral resource allocation may particularly denote the assignment of certain spectral portions of an available entire spectral bandwidth of an optical link to a data connection between two certain network nodes. The spectral portions may have a frequency distribution which may be defined by a center frequency and a bandwidth and/or by a lower frequency and an upper frequency. Depending on the shape of the frequency distribution the lower frequency and/or the upper frequency may be assigned to a more or less sharp edge of the frequency distribution or to the spectral position of a smooth transition. In the latter case the lower frequency and/or the upper frequency may be given e.g. by the so called Full Width at Half Maximum (FWHM) of a smooth spectral curve such as curve describing a Lorentzian distribution or a Gaussian distribution.

It is mentioned that in this respect the elucidations given above also apply in a corresponding manner with respect to the wavelength lambda which is proportional to the inverse of the frequency (lambda ∼ 1/frequency).

The term "optical link" may denote any optical connection between two optoelectronic devices, wherein one optoelectronic device is an optical sender, e.g. a laser diode, and the other optoelectronic device is an optical receiver, e.g. a photo diode. A frequency selection may be made by appropriate spectrally adaptable filters (in particular at the receiver side) and/or by an activation of one specific optical element which together with other optical elements forms the respective optoelectronic device. Thereby, the latter may apply in particular to the optical sender which may comprise a plurality of laser diodes each being configured for emitting a certain spectral distribution with a different center frequency.

The optical sender and/or the optical receiver may be realized in particular with a Wavelength Selective Optical Switch (WSOS) device, which is capable to adjust, in response to appropriate control signals, the spectral distribution of the optical (electromagnetic) signals being transmitted respectively being received. A WSOS device is often also called a Flexible Wavelength Selective Switch device. For the sake of conciseness such a device is hereinafter also denominated as a "FlexiGrid" device, because on the frequency scale the spectral emissions are not assigned to a fixed grid.

The optical link may be spatially constrained by an optical fiber. However, it may also be possible that the optical link is defined by an appropriate relative positioning between optical sender and optical receiver, wherein optionally optical elements like lenses or mirrors may be used for optically coupling the sender and the receiver.

Spectrally separating the first spectral resource allocation from the second spectral resource allocation may mean in particular that after the separation is completed there is no more a spectral overlap between the two spectral resource allocations.

According to an embodiment of the invention changing at least one of the two spectral resource allocations comprises shifting a center frequency of at least one spectral distribution of the respective spectral resource allocation. This may provide the advantage that the spectral resource allocation change may be accomplished in an easy manner.

According to a further embodiment of the invention changing at least one of the two spectral resource allocations comprises modifying a width of at least one spectral distribution of the respective spectral resource allocation. This may provide the advantage that the final overall spectral resource allocation may be such that the available bandwidth can be utilized in an optimal manner. As a consequence, the capacity of the optical link with respect to the amount of data which can be transferred within a certain time period can be increased or decreased.

According to a further embodiment of the invention the first spectral resource allocation is described with at least one first spectral resource descriptors and/or the second spectral resource allocation is described with at least one second spectral resource descriptor. Further, at least one of the two spectral resource descriptors defines a spectral channel in terms of a lower spectral limit and an upper spectral limit.

The spectral limits may be given in terms of frequency respectively energy or in terms of wavelength. In this respect it should be clear that, as has already been mentioned above, from a physical point of view both representations in frequency/energy and lambda are equal.

It is mentioned that in comparison with spectral channel descriptors used for an optical network operating only at fixed grid frequencies the spectral resource descriptors according to this embodiment of the invention are more specific and may be necessary for an optical network operating at flexible frequencies (and using optical networks with WSOS devices).

Put in other words, instead of wavelengths/labels being expressed by an index into a static and equidistant grid, a more complex representation for the spectral resource allocations is used in order to precisely define the occupied spectral resources.

According to a further embodiment of the invention the first spectral resource allocation is described with a first spectral resource descriptor and/or the second spectral resource allocation is described with a second spectral resource descriptor. Further, at least one of the two spectral resource descriptors defines a spectral channel in terms of one center spectral position and a bandwidth encompassing the center spectral position in a symmetric manner.

Also in this case the frequency respectively the energy or the wavelength may be used, now for the center spectral position and the bandwidth, in order to define the spectral resources.

It is mentioned that the spectral resource description according to this embodiment comprises exactly (and not more) the accuracy which is needed for defining the spectral resources within an optical network operating at flexible frequencies.

According to a further embodiment of the invention changing at least one of the two spectral resource allocations is carried out based on a quality of service metric which is achievable with the new first spectral resource allocation and/or with the new second spectral resource allocation. This may provide the advantage that it can be ensured, that a data transfer rate which is necessary for a certain quality of service and which may have been promised to a certain user using a certain data connection will not be reduced also after the change of the at least one of the two spectral resource allocations.

In this respect it is mentioned that the change of the at least one spectral resource allocation may of course take into account the type and/or the data rate (bit-rate) of those signals, which are supposed to be transmitted within the new first spectral resource allocation and/or within the new second spectral resource allocation. Thereby, the type of signal may be given by the modulation format (e.g. on-off keying (OOK), Quadrature phase-shift keying (OPSK), ...) of the respective signal.

When taking into account the type and/or the data rate of the signal(s) being supposed to be transmitted (after the change) the corresponding parameter values may be provided by the control plane of the optical network and may be forwarded to any involved path computation entity such as a so called Open Shortest Path First-TE (OSPF-TE) device or a so called Path Computation Element (PCE) for a meaningful data traffic engineering.

According to a further embodiment of the invention changing at least one of the two spectral resource allocations is carried out under consideration of a protocol for coordinating the operation of at least the first network node and the second network node. With the protocol based coordination of the involved network nodes as specified with this embodiment it can be guaranteed that the described optimization procedure can be performed in a reliable manner such that the number of network errors can be kept small.

According to a further embodiment of the invention the protocol comprises, for each spectral resource allocation, (a) a first specification of the spectral resource allocation before the changing, (b) a second specification of the spectral resource allocation after the changing, and (c) a third specification defining the point in time when the changing will start.

In this respect it is pointed out that the timing of the performed spectral resource allocation change may be an important characteristic of the described method. It is evident that an appropriate synchronization between all involved network nodes is essential in order to have the change of the spectral resource allocation at both ends of an optical end-to-end connection at the same time. This is in particular essential if two opposite transmission directions should be involved in the described spectral resource allocation optimization method.

According to a further embodiment of the invention the protocol comprises, for each spectral resource allocation, a fourth specification being indicative about how fast the spectral resource allocation changing is to be carried out.

In case of a simple shift of the respective spectral resource allocation the fourth specification may include an information about the time duration within which a certain number of (predefined small) frequency shift steps corresponding to the entire frequency shift have to be made.

It is pointed out that the described fourth specification can be omitted if the shift is slow enough so that the optical receiver side of the involved network node can adapt autonomously and the optical transmitter side of the involved network node can effectively govern the frequency shift.

According to a further aspect of the invention there is provided a method for optimizing spectral resource allocations for a plurality of consecutive optical links within a meshed optical network. The provided method comprises performing, for at least two optical links, the method as described above, wherein the respective spectral resource allocations are changed in a coordinated manner such that the number of pure optical data connections respectively between two end point network nodes being optically connected via at least one intermediate network node is maximized.

The described method for optimizing a plurality of spectral resource allocations each being assigned to one optical link is based on the idea that the above described method for optimizing a spectral resource allocation for a single optical link can be carried out in a coordinated manner for a plurality of data connection between two (not directly neighboring) end point network nodes. In this respect not neighboring may mean that the path between the two end point network nodes comprises at least one intermediate network node. By coordinating the respective spectral resource allocation changes in an appropriate manner for each of the at least "two-hop" data connection on the so called fiber layer the probability for allowing to establish a pure optical data connection can be maximized.

In this respect a "two-hop" data connection on the fiber layer is a data connection where the respective data signals are transmitted indirectly between two end point network nodes via an intermediate network node. Correspondingly, a multi-hop data connection is a data connection wherein the data signals are transmitted via a corresponding number of intermediate network nodes.

A pure optical two-hop or multi-hop data connection is a data connection wherein at the at least one intermediate network node there is no conversion to and/or from an electrical representation of data signals. The optical data signals just pass through the respective intermediate network node. In this document a pure optical data connection is denominated as a data connection which is characterized by a "wavelength continuity".

As has already been described above in the introductory portion of the description, when the number of data connections within an optical network, which are pure optical, is at most (depending on the overall available data links and the entire amount of data which have to be transmitted), a so called "global wavelength continuity" will be realized within the optical network.

It is mentioned that the coordinated change of the plurality of spectral resource allocations may be realized by providing the parameters bit-rate and signal type (e.g. the above mentioned modulation format) by the control plane to any involved path computation entity (OSPF-TE, or alternatively a PCE) for a meaningful traffic engineering.

According to an embodiment of the invention the respective spectral resource allocations are changed in response to an Resource Reservation Protocol comprising an extension defining the resulting new first spectral resource allocation and the new spectral resource allocation and defining a trigger for the point in time when the respective spectral resource allocations are changed.

The described RSVP may be based a RSVP TE Generalized Multi-Protocol Label Switching (GMPLS) protocol. In this respect "based on" may mean that an appropriate extension to the RSVP TE GMPLS has to be provided taking into account the spectral resource allocation changes described in this document.

RSVP does not transport application data but is similar to a control protocol. Further, RSVP can be used by either hosts or routers to request or deliver specific levels of quality of service (QoS) for application data streams or flows. RSVP defines how applications place resource allocation reservations and how they can relinquish the reserved resource allocation resources once the need for them has ended. RSVP operation will generally result in resource allocations being reserved in each network node along a certain path between two end network nodes.

According to a further embodiment of the invention, if for a specific pure optical data connection between two end point network nodes being supposed to be established necessary spectral resources are not available the Resource Reservation Protocol is configured for initiating a defragmentation of existing spectral resources for the at least two optical links in order to free up spectral resources for the specific pure optical data connection being supposed to be established.

With this method a global wavelength continuity can be established in a reactive manner. This may provide the advantage that a change in spectral resource allocations is only performed when being indeed necessary. This means that potentially unnecessary spectral resource allocation changes or spectral resource reallocations can be avoided.

The described method may be in particular beneficial when at least one of the two (existing) optical links are realized in a pure optical manner (wavelength continuity) via an intermediate optical node and the pure optical data connection being supposed to be established involves the same intermediate optical node. In this case the described method helps to reduce in a reactive manner optical bottlenecks at this intermediate optical node.

According to a further embodiment of the invention in an operational state of the optical network, wherein the number of pure optical data connections respectively between two end point network nodes being optically connected via at least one intermediate network node is maximized, the Resource Reservation Protocol is configured for initiating a defragmentation of existing spectral resources for the at least two optical links in order to free up spectral resources for a so far unknown pure optical data connection which may have to be established in the future.

With this method a global wavelength continuity can be established in a proactive manner. This may mean that during a dynamic operation of the optical network, the number of light paths, i.e. pure optical data connections between two end point network nodes, which will have to be switched on and/or off, will be reduced. In this respect "dynamic operation" means that the collectivity of the data connections within the optical network changes with time.

Preferably, within the optical network there are no more any light paths which have to be switched on or off. Specifically, the involved network nodes are no more requested to switch on and/or off certain spectral channels. This may provide the advantage that power transients of the respective network nodes can be avoided and the operational stability of the whole optical network can be improved.

Also the method described with this embodiment may be in particular beneficial when at least one of the two (existing) optical links are realized in a pure optical manner (wavelength continuity) via an intermediate optical node and a so far unknown pure optical data connection which may be established in the future involves the same intermediate optical node. In this case the described method helps to reduce in a proactive manner optical bottlenecks at this intermediate optical node.

According to a further aspect of the invention there is provided a control device for optimizing a spectral resource allocation for an optical link optically connecting within an optical network a first network node with a neighboring second network node. The provided control device comprises (a) a first receiving unit for obtaining first information about a first spectral resource allocation used for a first data connection being established over the optical link; (b) a second receiving unit for obtaining second information about a second spectral resource allocation used for a second data connection being supposed to be established over the optical link; (c) a processing unit for comparing the first spectral resource allocation with the second spectral resource allocation; and (d) a control unit for changing, in the presence of a spectral overlap between the first spectral resource allocation and the second spectral resource allocation, at least one of the two spectral resource allocations in such a manner that the resulting new first spectral resource allocation is spectrally separated from the resulting new second spectral resource allocation.

Also the described control device is based on the idea that by reallocating spectral resources on an optical link for a first data connection extending between two network nodes the correspondingly released spectral resources can be allocated for the second data connection. In this way the utilization of the optical link with respect to the amount of data which can be transferred over the optical link can be increased and the efficiency of optical data links in particular within meshed optical networks can be increased.

The described control device may be realized as a single network controlling entity such as the above mentioned Open OSPF-TE device or the PCE. Alternatively, the described control device may be physically realized in a spatial distributed manner between different network controlling entities, which cooperate with each other is a coordinated manner in order to realize all functions of the described control device.

According to a further aspect of the invention there is provided a computer program for optimizing a spectral resource allocation on an optical link optically connecting within an optical network a first network node with a neighboring second network node. The computer program, when being executed by a data processor, is adapted for controlling and/or for carrying out (a) the above described method for optimizing a spectral resource allocation on an optical link optically connecting within an optical network a first network node with a neighboring second network node and/or (b) the above described method for optimizing spectral resource allocations for a plurality of optical links within a meshed optical network.

As used herein, reference to a computer program is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a control device in accordance with an embodiment of the invention.
Figure 2 shows a meshed optical network comprising a plurality of network nodes wherein a pure optical end-to-end connection between two network nodes is established via two intermediate network nodes.
Figure 3 illustrates two different ways how to forward a data signal at a WSOS network node comprising an optical module and an electronic module.
Figure 4 illustrates a spectral resource reallocation for an optical communication between two end network nodes via two intermediate network nodes.

### Detailed Description

The illustration in the drawing is schematically. It is noted that in different figures, similar or identical elements or features are provided with the same reference signs In order to avoid unnecessary repetitions elements or features which have already been elucidated with respect to a previously described embodiment are not elucidated again at a later position of the description.

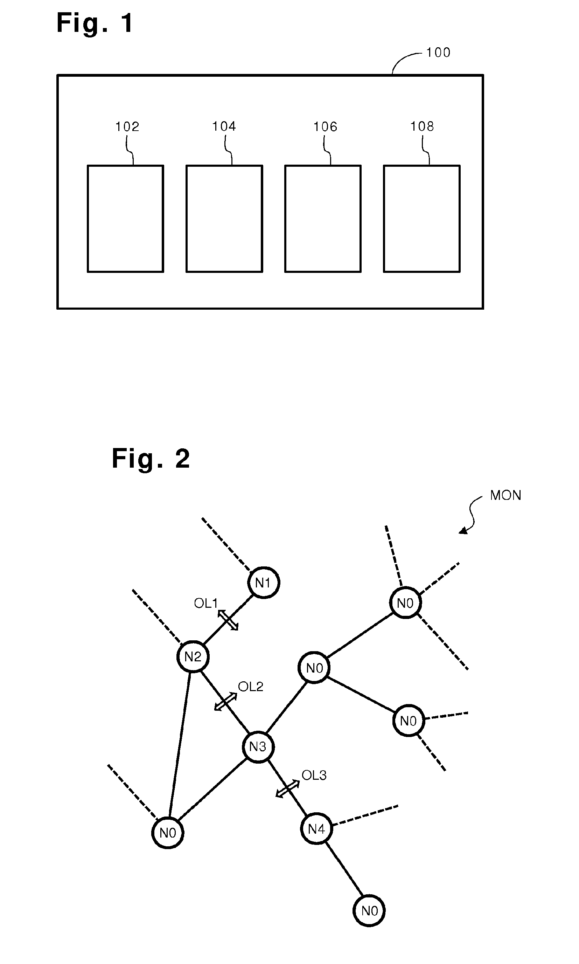

Figure 1 shows in accordance with an embodiment of the invention a control device 100 for optimizing a spectral resource allocation for an optical link optically connecting a first network node with a neighboring second network node. According to the exemplary embodiment described here the control device 100 is realized by a Path Computational Element (PCE). The PCE may be connected directly or indirectly at least with those network nodes which are involved in the spectral resource reallocation.

The control device 100 comprises a first receiving unit 102 for obtaining first information about a first spectral resource allocation used for a first data connection being established over the optical link. The control device 100 further comprises a second receiving unit 104 for obtaining second information about a second spectral resource allocation used for a second data connection being supposed to be established over the optical link. The control device 100 further comprises a processing unit 106 for comparing the first spectral resource allocation with the second spectral resource allocation. Furthermore, the control device 100 comprises a control unit 108 for changing, in the presence of a spectral overlap between the first spectral resource allocation and the second spectral resource allocation, at least one of the two spectral resource allocations in such a manner that the resulting new first spectral resource allocation is spectrally separated from the resulting new second spectral resource allocation.

Figure 2 shows a meshed optical network MON which employs a flexible wavelength grid technology. The meshed optical network MON comprises a plurality of network nodes N0, N1, N2, N3, N4. The network nodes N0-N4 are interconnected with optical links which are depicted as full or as dashed lines. The meshed optical network MON further comprises a control device 100 as depicted in Figure 1. The operation of at least the network nodes N1-N4 is controlled at least partially by the control device 100.

The meshed optical network MON depicted in Figure 2 is in an operational state where an end-to-end connection between the network node N1 and N4 is established via the two intermediate network nodes N2 and N3. The optical link between the network node N1 and the network node N2 is denominated with reference numeral OL1, the optical link between the network node N2 and the network node N3 is denominated with reference numeral OL2, the optical link between the network node N3 and the network node N4 is denominated with reference numeral OL3.

As will be described below in more detail, by rearranging the spectral allocations for the end-to-end connection between N1 and N4 it is possible to establish this end-to-end connection between N1 and N4 (via N2 and N3) as a pure optical data connection.

Within the described meshed optical network MON at least each one of the network nodes N1-N4 comprises a so called Wavelength Selective Optical Switch (WSOS) device which allows to adjust the spectral properties of the optical data signals being transmitted and/or being received in a quasi-continuous manner. This means that with a small granularity of e.g. a few Gigahertz the spectral distribution of emitted optical signals and/or the spectral sensitivity for received optical signals can be freely adjusted. Specifically, both the respective bandwidth and the respective center frequency can be selected depending on a control signal generated e.g. by a PCE and received by the respective network node.

In order to effectively operate the meshed optical network MON it is of advantage if the number of pure optical connections (see the term "wavelength continuity" elucidated above) is maximal. With respect to the optical links OL1-3 this means that the optical data signals between network node N1 and network node N4 must be the same from an optical point of view. In this case, at least when the power of the optical signal generated e.g. by the network node N1 is large enough in order to reach the receiving network node N4 with a sufficient intensity, there is no need for any conversion between optic signals and electronic signals and vice versa at any one of the intermediate network nodes N2 and N3. In other words, when a pure optical connection is established between the network nodes N1 and N4 respective optical data signals only pass-through the intermediate network nodes N2 and N3.

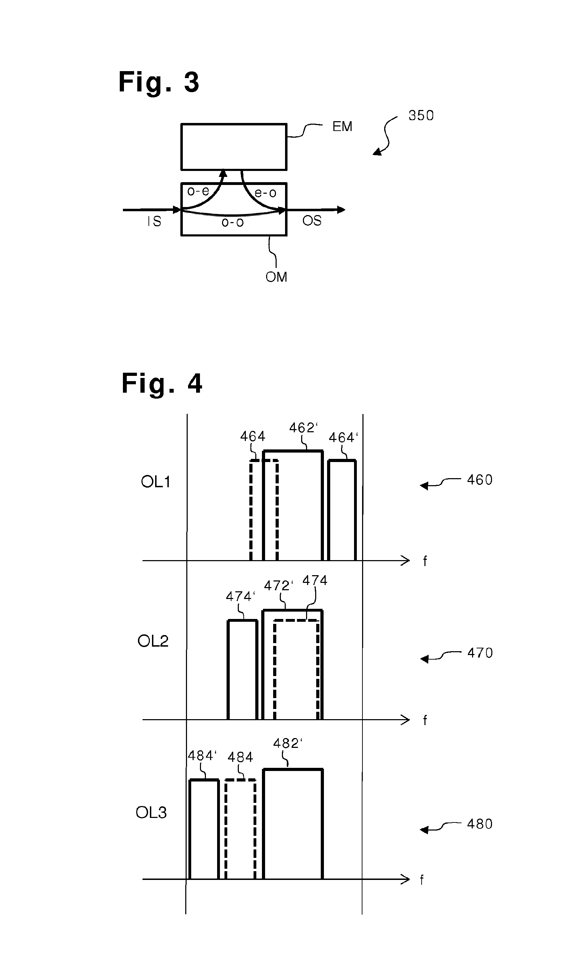

In order to understand the physics providing the basis for operating the described meshed optical network MON reference is made to Figure 3, which illustrates in a schematic manner a Wavelength Selective Optical Switch (WSOS) 350 device being comprised at least in the four network nodes N1-N4.

As can be seen from Figure 3, the WSOS 350 comprises an optic module OM and an electronic module EM. The optic module OM has an input terminal for receiving an optical input (data) signal IS and an output terminal for emitting an optical output (data) signal OS. The electronic module EM is connected in a known manner with the optic module OM.

As can be further seen from Figure 3, there are two fundamentally different ways (A) and (B) how to forward a data signal with the WSOS 350:
(A) The first way is a simple passing-through of the optical input signal IS. In this case the optical output signal OS is the same as the optical input signal IS. This first way is illustrated in Figure 3 with "o-o". Further, this first way is briefly denominated with the term "wavelength continuity".
(B) The second way comprises a first conversion between the optic input signal IS and an electronic input signal received by the electronic module EM. In Figure 3 this first conversion is illustrated with "o-e". The second way further comprises a second conversion between an electric output signal provided by the electric module EM and output by the optic module OM as the optical output signal OS. In Figure 3 this second conversion is illustrated with "e-o".

Figure 4 illustrates a spectral resource reallocation within the three optical links OL1, OL2, and OL3 illustrated in Figure 2 in order to allow for a pure optical data communication which is supposed to be established between the two end network nodes N1 and N4 via the two intermediate network nodes N2 and N3. The spectral resource reallocation in the optical link OL1 is illustrated in diagram 460. The spectral resource reallocation in the optical link OL2 is illustrated in diagram 470. The spectral resource reallocation in the optical link OL3 is illustrated in diagram 480. At the axis of abscissa the frequency of the respective spectral resource allocation is plotted.

In each diagram the (initial) spectral resource allocation before the change (i.e. the reallocation) is depicted with a dashed line and the (final) spectral resource allocation after the reallocation is depicted with a full line.

The spectral resource allocations for the new pure optical data communication between the two end network nodes N1 and N4 are denominated with reference numeral 462', 472', and 482' for the optical link OL1, OL2, and OL3, respectively. As can be seen, the respective spectral resource allocation is the same for all optical links and the constraint "wavelength continuity" is fulfilled.

According to the exemplary embodiment described here, before providing the necessary spectral resources for the new pure optical data communication these spectral resources must be freed by reallocating spectral resource allocations for not specified further data communication between any other network nodes at the various optical links OL1, OL2, and OL3. This is illustrated in Figure 4.

Specifically, a further spectral resource allocation at the first optical link OL1 is denominated with reference numerals 464 and 464', wherein the spectral resource allocation before the reallocation is indicated with reference numeral 464 and the spectral resource allocation after the reallocation is indicated with reference numeral 464'. In the same manner, a further spectral resource allocation at the second optical link OL2 is denominated with reference numerals 474 and 474' and a further spectral resource allocation at the third optical link OL3 is denominated with reference numerals 484 and 484'.

For the sake of clarity of the illustration of Figure 4 the spectral resource allocations of all optical data communication apart from the spectral resource allocation 462', 472', and 482' of the newly established pure optical data communication between the two end network nodes N1 and N4 are illustrated with a smaller height.

Descriptive speaking, the spectral resource allocation at an optical link may show several reservations for a number of traversing lightpaths each being associated with a certain data communication. If a number of consecutive optical links is chosen for a new lightpath by means of path computation, the different spectral resource allocations at the involved optical links may overlap in a way that there is no spectral reservation possible on all involved optical links which satisfies the "wavelength continuity" constraint. Consequently, at least one existing reservation on at least one involved optical link needs to be pushed "aside".

According to the exemplary embodiment described here the spectral resource allocations 474 and 464 require to be changed with respect to their position on the frequency axis and/or with respect to their bandwidth, in order not to intersect with the spectral resource allocations 462' and 472'. However, it is mentioned that a spectral resource reallocation can generally involve a frequency shift and/or a bandwidth change. Due to the aforementioned wavelength continuity constraint, the changes in spectral resource allocation need to be realized end-to-end, i.e. affecting those lightpaths which are responsible for the spectral resource allocations to be changed.

It should be understood that when reallocating a spectral resource in most cases spectral resources will become free and can be used for another optical end-to-end connection between other network nodes, which preferably also is a pure optical connection. Only in exceptional cases there will be no spectral resources become free. Such an exceptional case is for instance a spectral widening where the spectral distribution after the reallocation has the same center frequency but a wider bandwidth.

By reallocating the spectral resources within the meshed optical network MON in a coordinated manner the efficiency of the meshed optical network MON may be increased in particular in case the number of pure optical end-to-end connections is maximized.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: control device / PCE
- 102: first receiving unit
- 104: second receiving unit
- 106: processing unit
- 108: control unit

- MON: meshed optical network
- N0-N4: network nodes
- OL1-3: optical links

- 350: Wavelength Selective Optical Switch (WSOS)
- OM: optic module
- EM: electronic module
- IS: optical input signal
- OS: optical output signal

- 460: spectral reallocation at optical link OL1
- 462': spectral allocation for new pure optical data communication at optical link OL1
- 464: spectral allocation for existing optical data communication before reallocation
- 464': spectral allocation for existing optical data communication after reallocation
- 470: spectral reallocation at optical link OL2
- 472': spectral allocation for new pure optical data communication at optical link OL2
- 480: spectral reallocation at optical link OL3
- 482': spectral allocation for new pure optical data communication at optical link OL3

## Claims

1. A method for optimizing a spectral resource allocation on an optical link (OL1) optically connecting within an optical network (MON) a first network node (N1) with a neighboring second network node (N2), the method comprising
obtaining first information about a first spectral resource allocation used for a first data connection being established over the optical link (OL1);
obtaining second information about a second spectral resource allocation used for a second data connection being supposed to be established over the optical link (OL1);
comparing the first spectral resource allocation with the second spectral resource allocation; and
in the presence of a spectral overlap between the first spectral resource allocation and the second spectral resource allocation, changing at least one of the two spectral resource allocations in such a manner that the resulting new first spectral resource allocation is spectrally separated from the resulting new second spectral resource allocation.

2. The method as set forth in the preceding claim, wherein
changing at least one of the two spectral resource allocations comprises
shifting a center frequency of at least one spectral distribution of the respective spectral resource allocation.

3. The method as set forth in any one of the preceding claims, wherein
changing at least one of the two spectral resource allocations comprises
modifying a width of at least one spectral distribution of the respective spectral resource allocation.

4. The method as set forth in any one of the preceding claims 1 to 3, wherein
the first spectral resource allocation is described with at least one first spectral resource descriptor and/or the second spectral resource allocation is described with at least one second spectral resource descriptor, whereby
at least one of the two spectral resource descriptors defines a spectral channel in terms of a lower spectral limit and an upper spectral limit.

5. The method as set forth in any one of the preceding claims 1 to 3, wherein
the first spectral resource allocation is described with a first spectral resource descriptor and/or the second spectral resource allocation is described with a second spectral resource descriptor, whereby
at least one of the two spectral resource descriptors defines a spectral channel in terms of one center spectral position and a bandwidth encompassing the center spectral position in a symmetric manner.

6. The method as set forth in any one of the preceding claims, wherein
changing at least one of the two spectral resource allocations is carried out based on a quality of service which is achievable with the new first spectral resource allocation and/or with the new second spectral resource allocation.

7. The method as set forth in any one of the preceding claims, wherein
changing at least one of the two spectral resource allocations is carried out under consideration of a protocol for coordinating the operation of at least the first network node (N1) and the second network node (N2).

8. The method as set forth in the preceding claim, wherein
the protocol comprises, for each spectral resource allocation,
a first specification of the spectral resource allocation before the changing;
a second specification of the spectral resource allocation after the changing; and
a third specification defining the point in time when the changing will start.

9. The method as set forth in the preceding claim, wherein
the protocol comprises, for each spectral resource allocation,
a fourth specification being indicative about how fast the spectral resource allocation changing is to be carried out.

10. A method for optimizing spectral resource allocations for a plurality of consecutive optical links (OL1, OL2, OL3) within a meshed optical network (MON), the method comprising
performing, for at least two optical links (OL1, OL2), the method as set forth in any one of the preceding claims, wherein
the respective spectral resource allocations are changed in a coordinated manner such that the number of pure optical data connections respectively between two end point network nodes (N1, N4) being optically connected via at least one intermediate network node (N2, N3) is maximized.

11. The method as set forth in the preceding claim, wherein
the respective spectral resource allocations are changed in response to an Resource Reservation Protocol comprising an extension defining the resulting new first spectral resource allocation and the new spectral resource allocation and defining a trigger for the point in time when the respective spectral resource allocations are changed.

12. The method as set forth in the preceding claim 11, wherein
if for a specific pure optical data connection between two end point network nodes (N1, N4) being supposed to be established necessary spectral resources are not available the Resource Reservation Protocol is configured for initiating a defragmentation of existing spectral resources for the at least two optical links (OL1, OL2) in order to free up spectral resources for the specific pure optical data connection being supposed to be established.

13. The method as set forth in the preceding claim 11, wherein
in an operational state of the optical network (MON) wherein the number of pure optical data connections respectively between two end point network nodes (N1, N4) being optically connected via at least one intermediate network node (N2, N3) is maximized the Resource Reservation Protocol is configured for initiating a defragmentation of existing spectral resources for the at least two optical links (OL1, OL2) in order to free up spectral resources for a so far unknown pure optical data connection which may have to be established in the future.

14. A control device for optimizing a spectral resource allocation for an optical link (OL1) optically connecting within an optical network (MON) a first network node (N1) with a neighboring second network node (N2), the control device (100) comprising
a first receiving unit (102) for obtaining first information about a first spectral resource allocation used for a first data connection being established over the optical link (OL1);
a second receiving unit (104) for obtaining second information about a second spectral resource allocation used for a second data connection being supposed to be established over the optical link (OL1);
a processing unit (106) for comparing the first spectral resource allocation with the second spectral resource allocation; and
a control unit (108) for changing, in the presence of a spectral overlap between the first spectral resource allocation and the second spectral resource allocation, at least one of the two spectral resource allocations in such a manner that the resulting new first spectral resource allocation is spectrally separated from the resulting new second spectral resource allocation.

15. A computer program for optimizing a spectral resource allocation on an optical link (OL1) optically connecting within an optical network (MON) a first network node (N1) with a neighboring second network node (N2), the computer program, when being executed by a data processor, is adapted for controlling and/or for carrying out
the method as set forth in any one of the preceding claims 1 to 9 and/or.
the method as set forth in any one of the preceding claims 10 to 13.
